# EUROPEAN PATENT SPECIFICATION

(11) **EP 2 055 621 B1**
(45) Date of publication and mention of the grant of the patent: **05.05.2010**
(21) Application number: 08015651.6
(22) Date of filing: 04.09.2008
(51) Int. Cl.: B62J 17/06, B62K 19/46, B60R 7/04

(54) **Vehicle having an article storing structure**
Fahrzeug mit einer Artikellagerungsanordnung
Véhicule comprenant une structure de stockage d'articles

(30) Priority: 02.11.2007 JP 2007286736
(43) Date of publication of application: 06.05.2009
(73) Proprietor: Honda Motor Co., Ltd., Tokyo 107-8556 (JP)
(72) Inventor: Morikawa, Yuichiro, Wako-shi Saitama 351-0193 (JP); Maeda, Yasuyuki, Wako-shi Saitama 351-0193 (JP); Kawame, Kazunori, Wako-shi Saitama 351-0193 (JP)
(74) Representative: Trossin, Hans-Jürgen

(56) References cited:
- JP-A- 11 198 878
- JP-A- 2001 063 657
- JP-A- 2007 152 972
- US-A- 5 795 005
- US-A- 5 800 004

## Description

### Technical Field

The present invention relates to an improvement in a vehicle having an article storing structure in which a storage is provided to a vehicle body in a manner capable of being opened and closed.

### Background Art

There is known an article storing structure for a vehicle which includes a storage, and a hinge portion for supporting the storage on the vehicle body in a manner capable of being opened and closed (see, for example, Patent Document No. JP-A-2003-191878).

In Fig. 11 of Patent Document No. JP-A-2003-191878, a leg shield 17R' on the right side constituting a body cover 15' is provided with a pivot 64 as a component of a hinge portion, a rotating arm 63 rotatably mounted to the pivot 64, and a storage box 56 (hereinafter, referred to as "pocket portion 56") mounted to the rotating arm 63.

The pocket portion 56 is provided so as to be rotatable about the pivot 64 between a retracted position where the pocket portion 56 is retracted in the leg shield 17R', and a drawn-out position where the pocket portion 56 is drawn out from the leg shield 17R'.

In the technique according to Patent Document No. JP-A-2003-191878, the pivot 64 is arranged horizontally in the lower portion of the pocket portion 56. In this case, articles can be easily taken out by making the opening angle large. However, when the pocket portion 56 is opened to a large opening angle, stored articles can easily drop from the pocket portion 56. To prevent dropping of stored articles from the pocket portion 56, it is necessary to take such a measure as to add a member for preventing the drop. However, providing such a member may lead to a reduction in the storage capacity of the pocket portion 56.

US 5,795,005 A discloses a storage compartment which has a cover which pivots between a closed position and an opened position and is pivotally mounted to a vehicle panel, such as a door, on one vertical edge. The cover includes a foldable floor section having one edge mounted to the edge of the cover and an opposite edge mounted to the vehicle such that the floor folds up when the cover is closed and opens flat when the cover is moved to an opened position. A side wall extends from the vertical edge of the cover opposite a pivot connection and is made of a collapsible material which folds in an accordion-like fashion to allow the compartment to fully collapse when the cover is moved to a closed position and expand and provide a generally triangular shaped storage compartment when opened.

US 5,800,004 A, which is regarded as the most relevant prior art, discloses an article storing structure for a vehicle comprising a pocket portion as a storage and a hinge portion for supporting the pocket portion on a vehicle body in a manner capable of being opened and closed and a hinge shaft constituting a rotation center of the hinge portion which is arranged so as to extend in a vertical direction, wherein the pocket portion includes a bottom portion and a circumferential wall erected on a lateral side of the bottom portion and has an opening that opens upward, and wherein a pocket-portion supporting portion which is suitable for dispersing the load exerted on the pocket portion, is attached in the horizontal direction and in the opening and closing direction of the pocket portion.

JP 11-198878 A discloses an article accommodating device of a scooter type vehicle in which a recess open to the back is provided in the center of a rear surface of a leg shield, which recess can be opened and closed by a lid provided with a pocket portion on the side facing the recess and supported on its lower end by a hinge portion on the leg shield, wherein a hinge shaft constituting a rotation center of the hinge portion is arranged so as to extend in a horizontal direction.

JP 2007-152972 A discloses a further scooter type vehicle in which an accommodating case is supported on its lower end by a hinge portion having a horizontal rotation axis on a leg shield in a manner that the upper part of the accommodating case is able to rotate.

JP 2001-063657 A discloses a motorcycle having an accommodating device, in which a back of a steering shaft is covered by a leg shield formed with a main accommodating opening and a sub accommodating opening at one end and the other end of the leg shield and main and sub lids for opening/closing the main and sub accommodating openings, respectively, are provided, wherein the main lid is pivotably connected to the leg shield by a hinge portion which is arranged at the bottom of the main lid, said hinge portion having a pivot axis extending in a horizontal direction.

### Problem to be Solved by the Invention

An object of the present invention is to provide a vehicle halving an article storing structure which secures a sufficient storage capacity of the pocket portion, makes it possible to easily take out stored articles stored in the pocket portion while enhancing the supporting strength of the pocket portion.

### Means for Solving the Problem

This object is achieved by a vehicle having an article storing structure according to claim 1.

An aspect of the invention according to Claim 1 relates to a vehicle having an article storing structure including a pocket portion as a storage, and a hinge portion for supporting the pocket portion on a vehicle body in a manner capable of being opened and closed, wherein a hinge shaft constituting a rotation center of the hinge portion is arranged so as to extend in a vertical direction.

In a further aspect of the invention according to Claim 1, the pocket portion includes a bottom portion and a circumferential wall erected on a lateral side of the bottom portion, and has an opening that opens upward.

In an aspect of the invention according to Claim 2, the pocket portion is connected to the hinge portion via a hinge arm.

In an aspect of the invention according to Claim 3, an exterior cover that constitutes a part of a design surface of a body cover is detachably mounted to the pocket portion.

In an aspect of the invention according to Claim 4, the body cover includes a cover member that covers a portion above the exterior cover when the pocket portion is closed, and as seen from above the vehicle body, a rear edge of the cover member has a recess that is recessed toward the front of the vehicle body.

### Effect of the Invention

In the aspect of the invention according to Claim 1, since the hinge shaft is arranged so as to extend in the vertical direction, the pocket portion rotates in the horizontal direction about the hinge shaft. Since the pocket portion moves in the horizontal direction and is arranged in a manner capable of being opened and closed, the pocket portion can be opened wide without tilting the pocket portion. Since the pocket portion is opened wide, articles can be easily put into the pocket portion, and articles can be easily taken out from the pocket portion.

Since there is no need to tilt the pocket portion, there is no fear of stored small articles dropping from the pocket portion when the pocket portion is opened wide. Further, since there is no need to provide an additional member for preventing dropping of stored articles, the storage capacity of the pocket portion is not reduced.

Furthermore, in the aspect of the invention according to Claim 1, the pocket portion includes a bottom portion and a circumferential wall erected on a lateral side of the bottom portion. Thus, a sufficient storage capacity can be secured for the pocket portion by increasing the height of the circumferential wall. Since the pocket portion is provided with the circumferential wall, there is no fear of articles stored in the pocket portion from dropping when the pocket portion is opened and closed.

In the aspect of the invention according to Claim 2, the pocket portion is connected to the hinge portion via the hinge arm, so the pocket portion can be opened further from an opened position. Since a hand can be inserted into a maintenance hole that opens after the pocket portion is further opened, when an auxiliary part that requires maintenance is arranged in the inner portion of the pocket portion, maintenance can be performed for the auxiliary part while keeping small articles in the pocket portion as they are, without detaching the pocket portion. Since there is no need to detach the pocket portion, the ease of maintenance for a front portion of a vehicle can be enhanced.

In the aspect of the invention according to Claim 3, an exterior cover is detachably mounted to the pocket portion, so it is possible to design the pocket portion without consideration of the shape, outward appearance, and the like of the exterior cover. That is, the degree of freedom in setting the shape of the pocket portion can be enhanced. If the degree of freedom in setting the shape of the pocket portion is enhanced, it is also possible to secure a large capacity of the pocket portion as compared with a case where the exterior cover is integrated with the pocket portion.

In the aspect of the invention according to Claim 4, a rear edge of the cover member has a recess that is recessed toward the front of the vehicle body. Thus, as compared with a case where the recess is not provided, upon opening the pocket portion, the area of the opening provided in the pocket portion can be made large even at a small opening angle of the pocket portion.

Since the opening area of the pocket portion can be made large, the ease of operation when storing articles into the pocket portion and when taking out articles from the pocket portion can be enhanced.

### Brief Description of the Drawings

Fig. 1 is a left side view of a motorcycle having an article storing structure according to the present invention.
Fig. 2 is a plan view illustrating the article storing structure.
Fig. 3 is a view as seen from the arrow 3 of Fig. 2.
Fig. 4 is a sectional view taken along the line 4-4 of Fig. 2.
Fig. 5 is a view illustrating the article storing structure and its operation (from when a pocket portion is closed to when the pocket portion is opened).
Fig. 6 is a view illustrating the operation of the article storing structure (when the pocket portion is fully open).
Fig. 7 is a view as seen from the arrow 7 of Fig. 2.
Fig. 8 is a sectional view taken along the line 8-8 of Fig. 7.

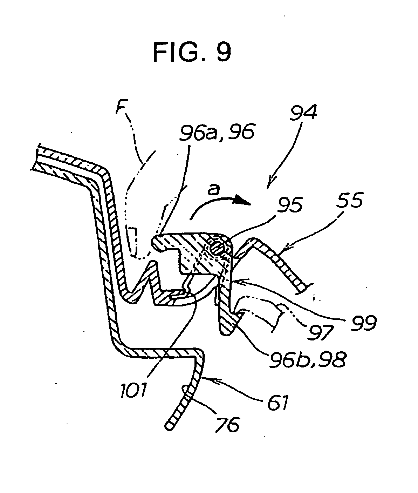

Fig. 9 is a sectional view taken along the line 9-9 of Fig. 7.
Fig. 10 is a view illustrating an article storing structure of a vehicle according to another embodiment.

### Best Mode for Carrying Out the Invention

The best mode for carrying out the present invention will be described below with reference to the attached drawings. In the drawings, "left", "right", "upper", "lower", "front, and "rear" respectively refer to directions as seen from the rider of the vehicle. It should be noted that the drawings are to be seen in the direction of reference numerals.

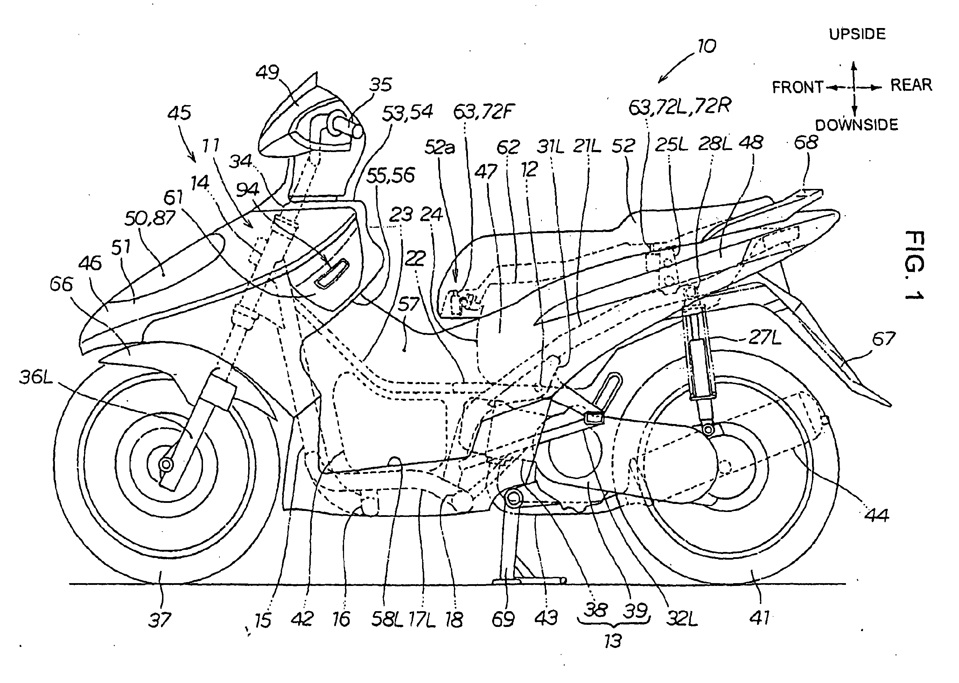

Fig. 1 is a left side view of a motorcycle according to the present invention having an article storing structure. A motorcycle 10 including a scooter-type vehicle is a so-called unit swing type vehicle having a body frame 11, and a power unit 13 that is mounted to the body frame 11 in a vertically swingable manner via a pivot point 12.

The body frame 11 includes, as its main components, a head pipe 14 provided at the front end portion of the vehicle, a main frame 15 that is extended obliquely downward toward the rear from the head pipe 14, a first cross frame 16 that is extended horizontally to the left and right at the lower end portion of the main frame 15, left and right lower frames 17L, 17R (only reference numeral 17L in the foreground of the drawing is shown) that are extended outward to the left and right from the lower portion of the main frame 15, and are then respectively extended rearward and supported on the first cross frame 16, a second cross frame 18 passed between the rear end portions of the left and right lower frames 17L, 17R, left and right rear frames 21 L, 21 R (only reference numeral 21 L in the foreground of the drawing is shown) that are erected obliquely upward toward the rear from the lower frames 17L, 17R to be extended to the rear portion of the vehicle and also serve as seat rails; a third cross frame 22 that is arranged forward from the intermediate portions of the rear frames 21 L, 21 R in a substantially U-shaped configuration in plan view and is passed between the rear frames 21 L, 21 R, and a center pipe 23 connecting between the main frame 15 and the third cross frame 22.

In the rear portions of the rear frames 21 L, 21 R, there are arranged storage-box supporting brackets 25L, 25R (only reference numeral 25L in the foreground of the drawing is shown) to which a storage box 24 described later is mounted. In the rear portions of the storage-box supporting brackets 25L, 25R, there are arranged rear cushion bolts 28L, 28R (only reference numeral 28L in the foreground of the drawing is shown) to which rear cushion units 27L, 27R (only reference numeral 27L in the foreground of the drawing is shown) are mounted. Further, the rear frames 21 L, 21 R are provided with pivot brackets 31 L, 31 R (only reference numeral 31 L in the foreground of the drawing is shown) including the pivot point 12 at which the power unit 13 is supported. Reference numerals 32L, 32R (only reference numeral 32L in the foreground of the drawing is shown) each denote a pillion step frame that supports a pillion passenger step.

A steering shaft 34 is steerably mounted to the head pipe 14. A steering handlebar 35 and front forks 36L, 36R (only reference numeral 36L in the foreground of the drawing is shown) are respectively mounted to the top and bottom of the steering shaft 34. A front wheel 37 is rotatably mounted to the lower end portions of the front forks 36L, 36R.

The power unit 13 includes an engine 38 provided substantially horizontally toward the front, and a transmission unit 39 mounted to the rear portion of the engine 38. A rear wheel 41 as a driving wheel is mounted to the rear end portion of the transmission unit 39.

The rear cushion units 27L, 27R are interposed between the rear end portion of the transmission unit 39 and the intermediate portions of the rear frames 21 L, 21 R.

A fuel tank 42 is arranged in the area located in front of the engine 38 and surrounded by the main frame 15, the center pipe 23, and the lower frames 17L, 17R. An exhaust pipe 43 is connected to the lower - portion of the engine 38. The exhaust pipe 43 is extended rearward and connected to a silencer 44.

The body frame 11 is covered by a body cover 45. A front body cover 46, an intermediate body cover 47, and a rear body cover 48 are arranged in order from the front to the rear. Reference numeral 49 denotes a handlebar cover, and 50 denotes a headlight as an auxiliary part described later.

The front body cover 46 includes a front cover 51 that constitutes the front surface of the vehicle, a front meter panel 54 as a cover member 53 which is arranged in front of an occupant seat 52 and constitutes a rider's seat, a leg shield 56 as an exterior cover 55 which is arranged continuous to the lower end portion of the front meter panel 54 and covers the feet of an occupant, a tunnel member 57 arranged in rear of the leg shield 56 and arranged between the thighs of the rider, and step floor portions 58L, 58R (only reference numeral 58L in the foreground of the drawing is shown) arranged on the left and right of the tunnel member 57 and serving as footrests for the rider.

The leg shield 56 is provided with a pocket portion 61 that serves as a storage.

The storage box 24 having an opening 62 at the top and serving as a storage is mounted to the storage-box supporting brackets 25L, 25R, and the occupant seat 52 is mounted so as to cover the opening 62 of the storage box 24 in such a way as to allow opening and closing of the opening 62. It should be noted that the occupant seat 52 is a seat on which the rider and the pillion passenger can be seated in a line in the front and in the rear and is formed integrally.

A front seating sensor 72F serving as a seating sensor 63 which detects the seating of the rider when seated is arranged at the front end portion 52a of the occupant seat 52. Center seating sensors 72L, 72R each serving as the seating sensor 63 which detect the seating of the rider when seated are arranged near the longitudinally central portion of the occupant seat 52. That is, the seating sensors 63 that detect the seating of the rider are provided.

In the drawing, reference numeral 66 denotes a front fender, 67 denotes a rear fender, 68 denotes a grab rail, and 69 denotes a main stand.

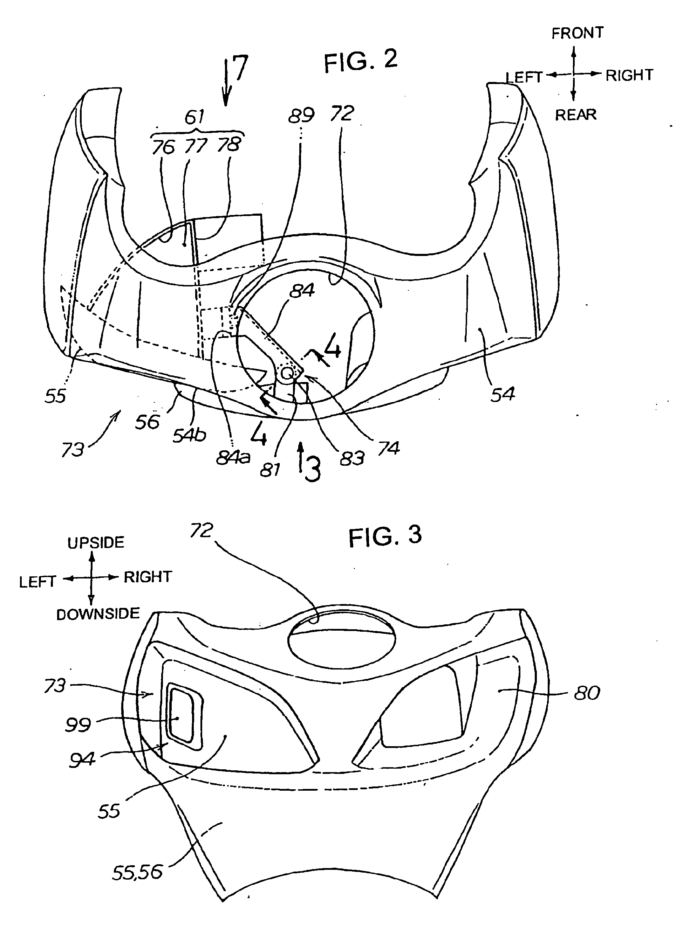

Fig. 2 is a plan view illustrating the article storing structure, and Fig. 3 is a view as seen from the arrow 3 of Fig. 2.

In the following, a description will be given while referring to Fig. 2 and Fig. 3. In the drawings, the body frame and other elements are omitted for the ease of understanding.

The front meter panel 54 having a handlebar hole 72 through which the steering shaft (reference numeral 34 in Fig. 1) passes is provided at the front portion of the motorcycle 10. The leg shield 56 that covers the occupant's feet is arranged at a rear edge 54b of the front meter panel 54.

An article storing structure 73 is provided at the front portion of the motorcycle 10. The article storing structure 73 includes the pocket portion 61 provided in an upper portion of the leg shield 56 which constitutes the vehicle body, and a hinge portion 74 that supports the pocket portion 61 in a manner capable of being opened and closed.

In this embodiment, the pocket portion 61 is arranged on the left side in the vehicle width direction, and the hinge portion 74 is similarly arranged also on the left side. It should be noted that the pocket portion 61 and the hinge portion 74 may be arranged on the right side in the vehicle width direction.

The pocket portion 61 is a member having an opening 76 at the top, and includes a bottom portion 77 and a circumferential wall 78 erected on four sides from the bottom portion 77. The exterior cover 55, which extends smoothly continuous to the outer surface of the leg shield 56 to constitute a design surface and has a holding portion 94 described later, is mounted to the pocket portion 61. Reference numeral 80 denotes a right lid member that closes a hole formed in the leg shield 56.

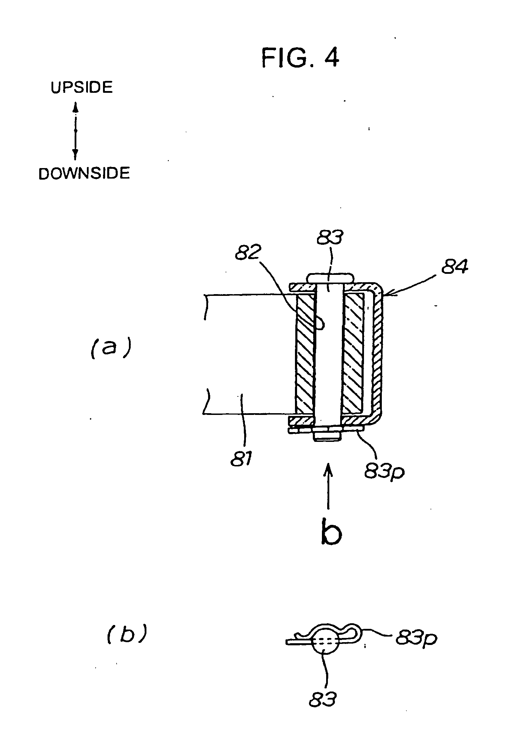

Fig. 4 is a sectional view taken along the line 4-4 of Fig. 2. In the following, a description will be given by also referring to Fig. 2.

In Fig. 4(a), a support stay 81 that supports the pocket portion 61 at the front of the vehicle body projects from the leg shield 56. A through hole 82 is formed vertically in the support stay 81. In the through hole 82, there is arranged a hinge shaft 83 that constitutes the rotation center of the hinge portion 74 so as to extend in the vertical direction of the vehicle body. A hinge arm 84 formed in a U shape in cross section is rotatably attached to the support stay 81 via the hinge shaft 83. A distal end portion 84a of the hinge arm 84 is connected to the pocket portion 61 via a bolt 89. In the drawings, reference numeral 83p denotes a detachment prevention member that prevents detachment of the hinge shaft 83. That is, the pocket portion 61 is mounted to the hinge portion 74 via the hinge arm 84.

Fig. 4(b) is a view as seen from the arrow b of Fig. 4(a), illustrating the detachment prevention member 83p that prevents the hinge shaft 83 from detaching from the support stay 81 and the hinge arm 84.

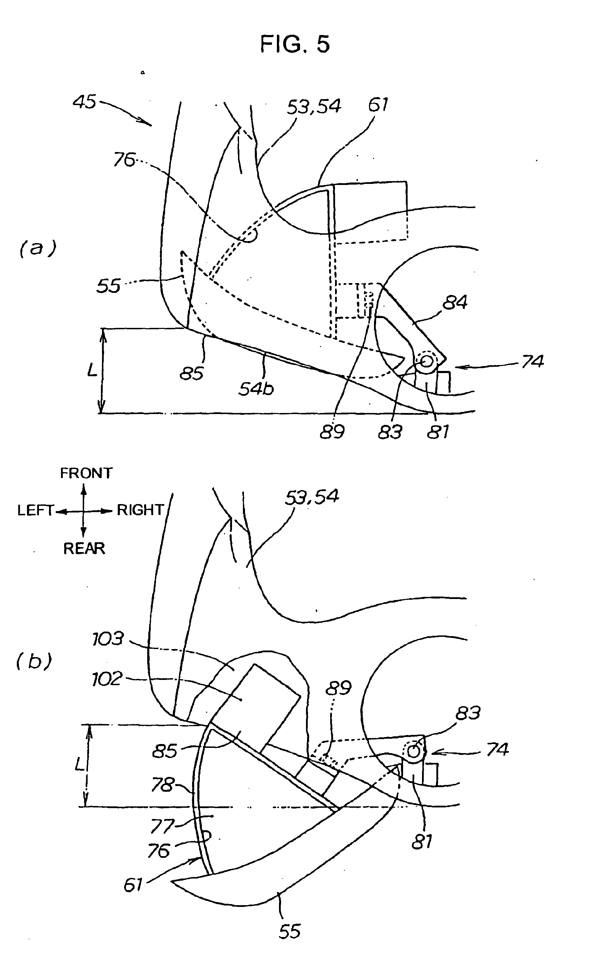

Fig. 5 is a view illustrating the article storing structure and its operation (from when the pocket portion is closed to when the pocket portion is opened).

In Fig. 5(a), the body cover 45 includes the front meter panel 54 serving as the cover member 53 that covers a portion above the exterior cover 55 when the pocket portion 61 is closed. The rear edge 54b of the front meter panel 54 has a recess 85 that is recessed by a length L toward the front of the vehicle body so as to extend outward in the width direction of the vehicle body from the center of the vehicle body.

As compared with a case where the recess 85 is not provided, the opening area of the opening 76 upon drawing out the pocket portion 61 becomes larger at the same opening angle, thereby making it easier to take articles in and out of the pocket portion 61.

In Fig. 5(b), since the hinge shaft 83 is arranged so as to extend in the vertical direction, the pocket portion 61 can be opened wide without tilting the pocket portion 61. Since the pocket portion 61 can be opened wide, putting of articles into the pocket portion 61 and taking of articles from the pocket portion 61 are facilitated. Since there is no need to tilt the pocket portion 61, there is no fear of stored small articles (stored articles) dropping from the pocket portion 61 when the pocket portion 61 is opened wide. Further, since there is no need to provide an additional member for preventing dropping of stored articles, there is no fear of the storage capacity of the pocket portion 61 being reduced.

Since the pocket portion 61 includes the bottom portion 77, and the circumferential wall 78 erected from the bottom portion 77, a sufficient storage capacity can be secured for the pocket portion 61 by increasing the height of the circumferential wall 78. In addition, this prevents articles stored in the pocket portion 61 from dropping when the pocket portion 61 is opened and closed.

Further, in the pocket portion 61, a pocket-portion supporting portion 102 for dispersing the load exerted on the pocket portion 61 is attached in the horizontal direction and in the opening and closing direction of the pocket portion 61.

Supposing that the pocket-portion supporting portion 102 is not attached, if a heavy article is accommodated in the pocket portion 61 when the pocket portion 61 is drawn out from the leg shield 56, the load of the heavy article must be supported by the hinge portion 74.

In this regard, according to the present invention, by attaching the pocket-portion supporting portion 102, the pocket portion 61 is supported via the pocket-portion supporting portion 102 by a flat surface 103 included in the leg shield 56. Since the pocket portion 61 is supported by the pocket-portion supporting portion 102 together with the hinge portion 74, it is possible to disperse the load exerted on the pocket portion 61, thereby enhancing the supporting strength of the pocket portion 61.

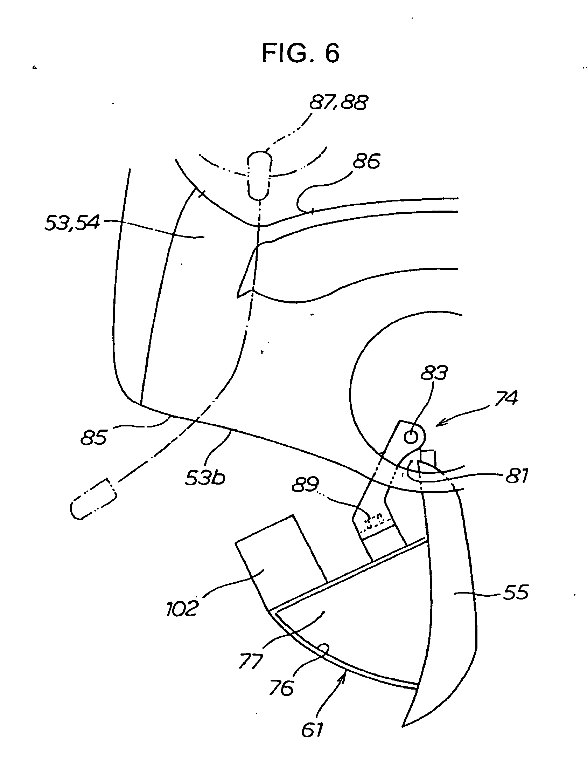

Fig. 6 is a view illustrating the operation of the article storing structure (when the pocket portion is fully opened). Since the pocket portion 61 is connected to the hinge portion 74 via the hinge arm 84, it is possible to further open the pocket portion 61 from an opened position.

A hand can be inserted into a maintenance hole 86 that opens after the pocket portion 61 is further opened. Thus, when an auxiliary part 87 that requires maintenance is arranged in the inner portion of the pocket portion 61, maintenance can be easily performed for the auxiliary part 87, for example, a headlight bulb 88 while keeping small articles in the pocket portion 61 as they are, without detaching the pocket portion 61. Since there is no need to detach the pocket portion 61, the ease of maintenance can be enhanced.

It should be noted that examples of auxiliary part include electrical parts such as a fuse and a relay.

The rear edge 53b of the cover member 53 has the recess 83 that is recessed toward the front of the vehicle body. Thus, as compared with a case where the recess 85 is not provided, upon opening the pocket portion 61, the area of the opening 76 provided in the pocket portion 61 can be made large at the same opening angle of the pocket portion 61. Since the opening area of the pocket portion 61 can be made large, the ease of unloading or storage of articles from or into the pocket portion 61 can be enhanced.

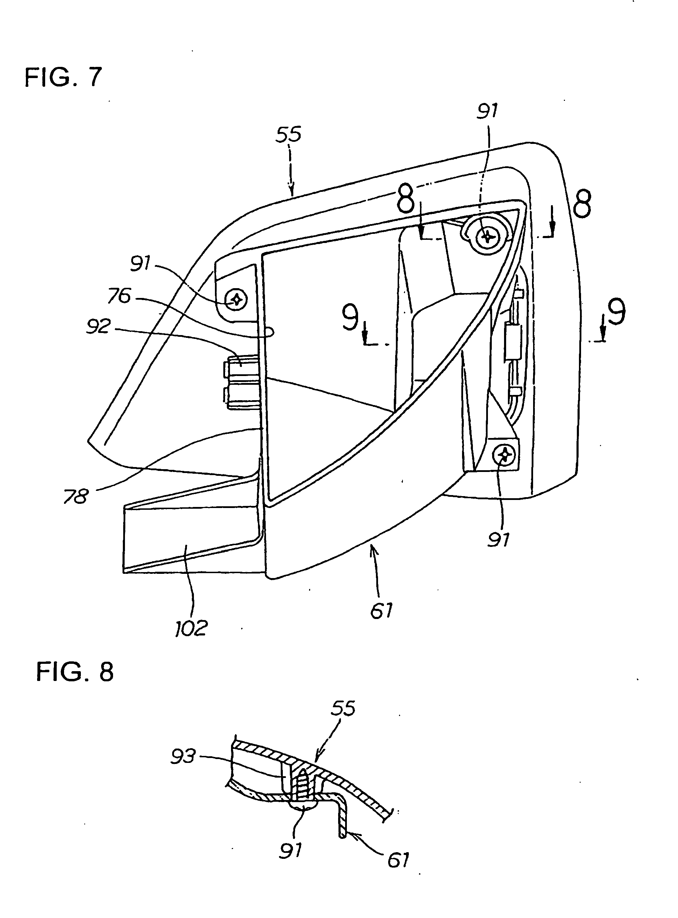

Fig. 7 is a view as seen from the arrow 7 of Fig. 2, illustrating that the exterior cover 55 constituting a part of the design surface of the body cover 45 is mounted to the pocket portion 61 via screw members 91.

An arm mounting portion 92 as a mounting seat for the hinge arm 84 is formed in the circumferential wall 78 of the pocket portion 61, thus allowing fixing of the hinge arm 84 to the pocket portion 61.

Fig. 8 is a sectional view taken along the line 8-8 of Fig. 7. A boss portion 93 into which the screw member 91 is screwed is formed in the back surface of the exterior cover 55. The screw member 91 is screwed in the boss portion 93. Since the mounting structure for the other screw members 91 is the same as the above-mentioned structure, description thereof is omitted.

Since the exterior cover 55 is detachably mounted to the pocket portion 61, it is possible to design the pocket portion 61 without consideration of the shape, outward appearance, and the like of the exterior cover 55. That is, the degree of freedom in setting the shape of the pocket portion 61 can be enhanced. If there is no need to consider the outward appearance and the like of the pocket portion 61, a large capacity can be secured for the pocket portion 61 as compared with a case where the exterior cover 55 is integrated with the pocket portion 61.

Returning to Fig. 7, while the number of the screw members 91 is three in this embodiment, this should not be construed restrictively. An arbitrary number of the screw members 91, for example, two, four, or five, can be set.

Fig: 9 is a sectional view taken along the line 9-9 of Fig. 7. The exterior cover 55 mounted to the pocket portion 61 in an integrated manner is provided with the holding portion 94 which, when the pocket portion 61 is closed, locks the pocket portion 61 onto the leg shield 56, thereby holding the pocket portion 61 in a closed state.

The holding portion 94 includes: a shaft portion 95; a lever member 99 that is rotatably attached to the shaft portion 95, and has one end 96a made to serve as a lever portion 96 into which an occupant or the like inserts a finger, and the other end 96b made to serve as an engaging portion 98 engaged with a claw portion 97 provided on the leg shield side; and a spring member 101 that urges the lever member 99 to the side opposite to the arrow a in the drawing.

To open the pocket portion 61 from a closed position, a finger F is hooked onto the lever portion 96, and the lever member 99 is rotated in the direction of the arrow a, thereby releasing the lock of the pocket portion 61.

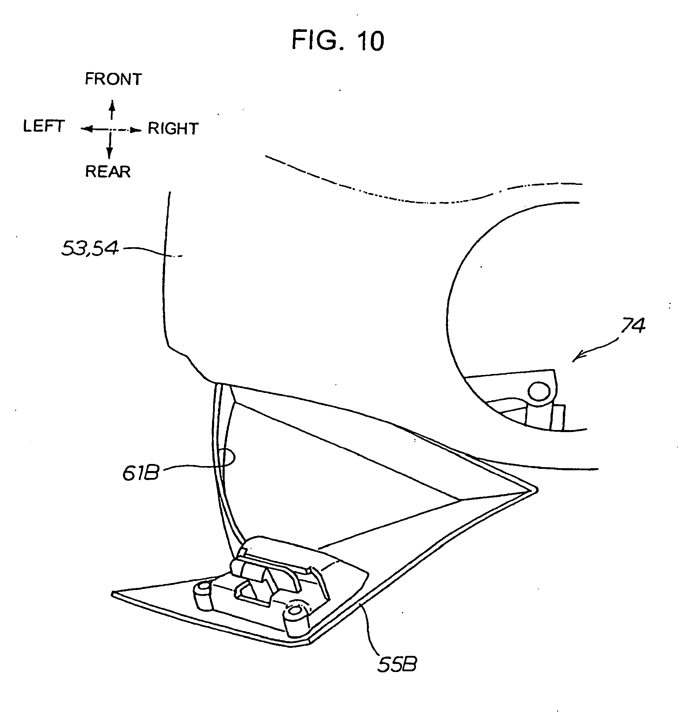

Fig. 10 is a view illustrating an article storing structure for a vehicle according to another embodiment. The major difference from the first embodiment resides in the integral formation of a pocket portion 61 B and an exterior cover 55B. Otherwise, there is no major difference.

While the embodiments the present invention are applied to a two-wheel vehicle, the present invention is also applicable to a three-wheel vehicle and a four-wheel vehicle, and the present invention may be applied to commonly used vehicles, as long as the vehicle is provided with a leg shield which constitutes the vehicle body.

### Industrial Applicability

The article storing structure of the vehicle according to the present invention is suitable for use in a scooter-type vehicle.

The present invention is directed to provide a vehicle 73 having an article storing structure which secures a sufficient storage capacity of the pocket portion 61, makes it possible to easily take out stored articles stored in the pocket portion 61 while enhancing the supporting strength of the pocket portion 61.

## Claims

1. A vehicle (73) having an article storing structure comprising:
a pocket portion (61) as a storage: and
a hinge portion (74) for supporting the pocket portion (61) on a vehicle body in a manner capable of being opened and closed,
wherein a hinge shaft (83) constituting a rotation center of the hinge portion (74) is arranged so as to extend in a vertical direction of the vehicle body;
wherein the pocket portion (61) includes a bottom portion (77) and a circumferential wall (78) erected on a lateral side of the bottom portion (77), and has an opening (76) that opens upward; and
wherein, in the pocket portion (61), a pocket-portion supporting portion (102) for dispersing the load exerted on the pocket portion (61) is attached in the horizontal direction and in the opening and closing direction of the pocket portion (61),
**characterized in that** the pocket portion (61) is provided in an upper portion of a leg shield (56) which constitutes the vehicle body, and the pocket portion (61) is adapted to be supported via the pocket-portion supporting portion (102) by a flat surface included in the leg shield (56), when the pocket portion (61) is opened.

2. The vehicle (73) according to Claim 1,
wherein the pocket portion (61) is connected to the hinge portion (74) via a hinge arm (84).

3. The vehicle (73) according to Claims 1 or 2,
wherein an exterior cover (55) that constitutes a part of a design surface of a body cover (45) is detachably mounted to the pocket portion (61).

4. The vehicle (73) according to Claim 3,
wherein the body cover (45) includes a cover member (53) that covers a portion above the exterior cover (55) when the pocket portion (61) is closed, and as seen from above the vehicle body, a rear edge of the cover member (53b) has a recess (85) that is recessed toward the front of the vehicle body.

## Patentansprüche

1. Fahrzeug (73) mit einer Gegenstand-Aufbewahrungsstruktur, umfassend:
einen Taschenabschnitt (61) als eine Aufbewahrung; und
einen Gelenkabschnitt (74), um den Taschenabschnitt (61) an einem Fahrzeugkörper in einer solchen Weise zu lagern, dass er geöffnet und geschlossen werden kann,
wobei eine Gelenkwelle (83), welche ein Drehzentrum des Gelenkabschnitts (74) bildet, derart angeordnet ist, dass sie sich in einer vertikalen Richtung des Fahrzeugkörpers erstreckt;
wobei der Taschenabschnitt (61) einen Bodenabschnitt (77) und eine Umfangswand (78) umfasst, welche auf einer lateralen Seite des Bodenabschnitts (77) montiert ist, und eine Öffnung (76) hat, welche nach oben öffnet; und
wobei in dem Taschenabschnitt (61) ein Taschenabschnitt-Lagerabschnitt (102), um die auf den Taschenabschnitt (61) ausgeübte Last zu verteilen, in der horizontalen Richtung und in der Öffnungs- und Schließrichtung des Taschenabschnitts (61) angebracht ist,
**dadurch gekennzeichnet,**
**dass** der Taschenabschnitt (61) in einem oberen Abschnitt eines Beinschildes (56) vorgesehen ist, welches den Fahrzeugkörper bildet, und
**dass** der Taschenabschnitt (61) dazu ausgebildet ist, über den Taschenabschnitt-Lagerabschnitt (102) durch eine flache Fläche gelagert zu werden, welche in dem Beinschild (56) enthalten ist, wenn der Taschenabschnitt (61) geöffnet ist.

2. Fahrzeug (73) nach Anspruch 1,
wobei der Taschenabschnitt (61) mit dem Gelenkabschnitt (74) über einen Gelenkarm (84) verbunden ist.

3. Fahrzeug (73) nach den Ansprüchen 1 oder 2,
wobei eine Außenabdeckung (55), welche Teil einer Designfläche einer Körperabdeckung (45) bildet, lösbar an dem Taschenabschnitt (61) angebracht ist.

4. Fahrzeug (73) nach Anspruch 3,
wobei die Körperabdeckung (45) ein Abdeckelement (53) umfasst, welches einen Abschnitt oberhalb der Außenabdeckung (55) abdeckt, wenn der Taschenabschnitt (61) geschlossen ist, und wobei von oberhalb des Fahrzeugkörpers gesehen, ein hinterer Rand des Abdeckelements (53b) eine Aussparung (85) hat, welche zur Vorderseite des Fahrzeugkörpers hin zurückgesetzt ist.

## Revendications

1. Véhicule (73) possédant une structure de stockage d'articles, comprenant :
une partie de poche (61) en guise de stockage ; et
une partie d'articulation (74) destinée à supporter la partie de poche (61) sur une carrosserie de véhicule de manière à pouvoir être ouverte et fermée,
dans lequel un arbre d'articulation (83) constituant un centre de rotation de la partie d' articulation (74) est agencé afin de s'étendre dans une direction verticale de la carrosserie de véhicule ;
dans lequel la partie de poche (61) comprend une partie inférieure (77) et une paroi circonférentielle (78) réalisée sur un côté latéral de la partie inférieure (77), et comporte une ouverture (76) qui s'ouvre vers le haut ; et
dans lequel, dans la partie de poche (61), une partie de support de partie de poche (102) destinée à disperser la charge exercée sur la partie de poche (61) est attachée dans la direction horizontale et dans la direction d'ouverture et de fermeture de la partie de poche (61),
**caractérisé en ce que** la partie de poche (61) est prévue dans une partie supérieure d'un protège-jambe (56) qui constitue la carrosserie de véhicule, et la partie de poche (61) est adaptée pour être supportée par l'intermédiaire de la partie de support de partie de poche (102) par une surface plate incluse dans le protège-jambe (56) lorsque la partie de poche (61) est ouverte.

2. Véhicule (73) selon la revendication 1,
dans lequel la partie de poche (61) est reliée à la partie d'articulation (74) par l'intermédiaire d'un bras d'articulation (84).

3. Véhicule (73) selon les revendications 1 ou 2,
dans lequel un carénage extérieur (55) qui constitue une partie d'une surface de conception d'un carénage de carrosserie (45) est monté de façon détachable sur la partie de poche (61).

4. Véhicule (73) selon la revendication 3,
dans lequel le carénage de carrosserie (45) comprend un élément de carénage (53) qui recouvre une partie au-dessus du carénage extérieur (55) lorsque la partie de poche (61) est fermée, et en vue de dessus de la carrosserie de véhicule, un bord arrière de l'élément de carénage (53b) comporte un évidement (85) qui est évidé vers l'avant de la carrosserie de véhicule.
